(19) Europäisches Patentamt
European Patent Office
Office européen des brevets

(11) EP 0 583 446 B1

(12) EUROPÄISCHE PATENTSCHRIFT

(45) Veröffentlichungstag und Bekanntmachung des Hinweises auf die Patenterteilung:
**14.08.1996 Patentblatt 1996/33**

(21) Anmeldenummer: **93903778.4**

(22) Anmeldetag: **01.03.1993**

(51) Int Cl.⁶: **D06M 13/02**, D06M 15/227, D06M 13/463, D06M 13/467, D06M 13/342

(86) Internationale Anmeldenummer:
**PCT/CH93/00050**

(87) Internationale Veröffentlichungsnummer:
**WO 93/18222 (16.09.1993 Gazette 1993/22)**

(54) **WACHSDISPERSIONEN, DEREN HERSTELLUNG UND VERWENDUNG**
WAX DISPERSIONS, THEIR PREPARATION AND USE
DISPERSIONS DE CIRE, LEUR PREPARATION ET UTILISATION

(84) Benannte Vertragsstaaten:
**CH DE FR GB IT LI**

(30) Priorität: **04.03.1992 DE 4206714**

(43) Veröffentlichungstag der Anmeldung:
**23.02.1994 Patentblatt 1994/08**

(73) Patentinhaber: **Clariant Finance (BVI) Limited
Road Town, Tortola (VG)**

(72) Erfinder: **DANNER, Bernard
F-68400 Riedisheim (FR)**

(74) Vertreter: **D'haemer, Jan Constant et al
Sandoz Technology Ltd.
Patents and Trademarks Division
4002 Basel (CH)**

(56) Entgegenhaltungen:
**EP-A- 0 416 917**
**DE-A- 1 469 457**
**DE-A- 3 003 851**
**US-A- 3 155 537**
**US-A- 3 386 938**
**US-A- 3 560 382**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 583 446 B1

## Beschreibung

Bei der maschinellen Bearbeitung von Fäden, vornehmlich von Garnen, besonders von solchen die im Laufe ihrer Berstellung chemisch behandelt worden sind (z.B. gebleicht, gefärbt und/oder optisch aufgehellt), in schnell-laufenden Bearbeitungsmaschinen, z.B. für das Winden (besonders Spulen und Umspulen), Weben, Wirken, Sticken usw., sind die Fäden bei der Fadenführung durch die verschiedenen Apparateteile hohen dynamischen Reibungen ausgesetzt, die zur Beschädigung der Faser und sogar bis zum Fadenbruch führen können (es kann z.B. durch die andauernde Reibung der Fäden an den Fadenführungsringen sogar eine Furche in diesen Ringen entstehen, wodurch die durch Reibung an den schnell-laufenden Fäden bzw. Garnen, die durch diese Ringe geführt werden, verursachten Schäden entsprechend verstärkt bzw. vermehrt werden). In solchen Fällen werden also die Fäden, bzw. die Fasern zu ihrer Berstellung, mit Hilfsmitteln behandelt, um die Gleitfähigkeit der Fäden zu erhöhen bzv. die Reibung gegen Apparteteile und auch untereinander zu vermindern. Bei solchen Faser- bzw. Fadenbehandlungsmitteln (Avivagemitteln) ist es gewünscht, daß sie eine möglichst starke Herabsetzung der dynamischen Reibung bewirken und daß ihre Permanenz auf der Faser derart sei, daß im gesamten Laufe der maschinellen Bearbeitung des Garnes die Wirkung erhalten bleibt und das Produkt auf den Apparateteilen für die Fadenführung nicht abgeschert oder abgeschmiert wird und außerdem daß der Weichgriff der Ware durch die Ausrüstung nicht beeinträchtigt werde, sondern im Gegenteil nach Möglichkeit verbessert werde.

Aus der DE-A-30 03 851 sind bestimmte Wachsdispersionen bekannt, die oxydierte Mikrowachse, Paraffine und kationische Tenside enthalten und die als Ausrüstungsmittel zur Verbesserung der maschinellen Trockenverarbeitbarkeit von Textilmaterial, besonders zur Verbesserung der Nähbarkeit von Textilbahnen dienen. Die dort in den Beispielen beschriebenen paraffinhaltigen Präparate enthalten als Paraffin ein relativ weiches Paraffin mit Schmelzpunkt = 56-58°C oder/und ein halbflüssiges Isoparaffin mit Siedebereich 210-250°C.

Es wurde nun gefunden, daß die unten beschriebenen Wachsdispersionen (G), die einen wesentlichen Gehalt an Wachsen ($A_1$) und ($A_2$) hoher Härte, wie unten definiert, aufweisen und mit einem kationischen Dispergiermittelsystem dispergiert sind, sich überraschend gut als Garnavivagemittel hervorragender Gleitwirkung und mechanischer Permanenz und insbesondere auch zur Erlangung eines angenehmen Weichgriffs eignen.

Die Erfindung betrifft die entsprechenden wäßrigen Wachsdispersionen, deren Herstellung und deren Vervendung als Avivagemittel, insbesondere als Garnavivagemittel.

Ein erster Gegenstand der Erfindung sind also wäßrige Wachsdispersionen (G), die einen Gehalt an

(A) einem Wachsgemisch aus

($A_1$) mindestens einem nicht oxydierten Paraffinwachs mit Nadelpenetration (nach ASTM-D 1321) ≤ 20 dmm und Schmelzbereich oberhalb 65°C
und

($A_2$) mindestens einem oxydierten Kohlenwasserstoffwachs mit Nadelpenetration (nach ASTM-D 1321) ≤ 4 dmm
und gegebenenfalls

($A_3$) mindestens einem nicht oxydierten Paraffinwachs mit Nadelpenetration (nach ASTM-D 1321) ≤ 55 dmm und Schmelzbereich unterhalb oder bis 65°C
und/oder

($A_4$) mindestens einem kationisch modifizierten oxydierten Kohlenwasserstoffwachs,

und

(B) einem kationischen Dispergiermittelsystem aufweisen.

Als Wachse ($A_1$), ($A_2$ ), ($A_3$) und ($A_4$) können im allgemeinen jeweils bekannte Wachse eingesetzt werden.

Die Paraffinwachse ($A_1$) und ($A_3$) sind im wesentlichen praktisch reine Kohlenwasserstoffe, wie sie insbesondere aus der Erdölverarbeitung gewonnen werden können und insbesondere makrokristallin, feinkristallin, malkristallin oder mikrokristallin sein können; sie können durch die Nadelpenetration und den Schmelzbereich charakterisiert werden.

Als Paraffinwachse ($A_1$) sind diejenigen bevorzugt, deren Schmelzbereich innerhalb des Temperaturbereiches von 65 bis 110°C, insbesondere 80 bis 105°C liegt und deren Nadelpenetration nach ASTM-D 1321 im Bereich von 1 bis 16, vorzugsweise 5 bis 16 dmm liegt. Vorteilhaft sind die Paraffinwachse ($A_1$) weitgehend frei von Ölen (der Ölgehalt ist vorzugsweise ≤ 0,5 %) und bevorzugt auch weitgehend frei von Aromaten. Bevorzugt werden als ($A_1$) sogenannte

Hartparaffine, insbesondere nicht-oxydierte mikrokristalline Wachse eingesetzt.

Die oxydierten Kohlenwasserstoffwachse ($A_2$) und diejenigen die als Ausgangsprodukte für die kationische Modifikation ($A_4$) eingesetzt werden, sind im allgemeinen carboxygruppenhaltige, oxydierte und gegebenenfalls teilverseifte Kohlenwasserstoffwachse und umfassen im allgemeinen beliebige synthetische und/oder mineralische Wachse, die in der oxydierten Form noch eine Wachsstruktur haben, insbesondere oxydierte Mikrowachse oder oxydierte Polyolefinwachse (vornehmlich Polyäthylenwachse) oder noch Wachse, die gegebenenfalls direkt in oxydierter Form synthetisiert werden, besonders Fischer-Tropsch Wachse, und auch deren Oxydationswachse, wobei die genannten oxydierten Wachse, besonders die oxydierten Polyolefinwachse und die Fischer-Tropsch Wachse, gegebenenfalls teilverseift sein können. Unter den erwähnten Wachsen sind die oxydierten und gegebenenfalls teilverseiften Mikrowachse, Fischer-Tropsch-Wachse und Polyäthylenwachse bevorzugt. Solche Wachse sind im allgemeinen bekannt und können durch übliche Parameter charakterisiert werden, wie die Nadelpenetration (z.B. nach ASTM-D 1321), den Erstarrungspunkt und/oder Tropfpunkt, die Säurezahl und gegebenenfalls auch die Verseifungszahl.

Als Wachse ($A_2$) kommen vorteilhaft oxydierte Mikrowachse, teilverseifte Fischer-Tropsch Wachse oder oxydierte und gegebenenfalls teilverseifte Polyäthylenwachse in Betracht, deren Schmelzbereich vorzugsweise im Temperaturbereich von 75 bis 120°C, insbesondere 80 bis 120°C, liegt und deren Säurezahl vorteilhaft im Bereich von 8 bis 55, vorzugsweise 10 bis 35, liegt. Die Verseifungszahl liegt vorteilhaft im Bereich von 18 bis 65, vorzugsweise 20 bis 55. Unter den oxydierten Mikrowachsen sind diejenige bevorzugt, deren Schmelzbereich innerhalb des Temperaturbereiches von 90 bis 120°C liegt; von den oxydierten gegebenenfalls teilverseiften Polyäthylenwachsen sind solche mit einem Schmelzbereich innerhalb des Temperaturbereiches von 100 bis 120°C bevorzugt, insbesondere diejenigen einer Dichte im Bereich von 0,93 bis 0,98; unter den Fischer-Tropsch-Wachsen, besonders den teilverseiften Fischer-Tropsch Wachsen, sind diejenigen bevorzugt, deren Schmelzbereich im Temperaturbereich von 80 bis 120°C liegt. Unter den genannten Wachsen sind insbesondere die teilverseiften (gegebenenfalls oxydierten) Fischer-Tropsch Wachse bevorzugt.

Im Gemisch aus ($A_1$) und ($A_2$) stellt das Wachs ($A_1$) vorteilhaft mindestens die Hälfte dar, wobei ($A_1$) vorzugsweise gegenüber ($A_2$) überwiegt. Das Gewichtsverhältnis ($A_2$)/($A_1$) liegt vorteilhaft im Bereich von 1/12 bis 1/1, vorzugsweise im Bereich von 1/10 bis 1/1,5, insbesondere im Bereich von 1/5 bis 1/1,7.

Die Wachsgemische (A) können aus ($A_1$) und ($A_2$) alleine bestehen; sie können aber auch vorteilhaft die obengenannten Wachse ($A_3$) enthalten. Der Schmelzbereich der Paraffinwachse ($A_3$) liegt vorteilhaft oberhalb von 30°C, vorzugsweise innerhalb des Temperaturbereiches von 45 bis 65°C, wobei der Erstarrungspunkt von ($A_3$) vorteilhaft um mindestens 10°C, vorzugsweise um mindestens 20°C tiefer liegt als derjenige von ($A_1$) bzw. der Tropfpunkt von ($A_3$), vorteilhaft um mindestens 10°C, vorzugsweise um mindestens 20°C tiefer liegt als derjenige von ($A_1$). Die Nadelpenetration von ($A_3$) nach ASTM-D 1321 liegt vorteilhaft im Bereich von 10 bis 45 dmm. Als ($A_3$) kommen insbesondere makrokristalline Paraffinwachse in Betracht; deren Ölgehalt kann z.B. bis 10 % sein, vorteilhaft $\leq$ 5 %; besonders bevorzugt als ($A_3$) sind die raffinierten Paraffinwachse mit einem Ölgehalt $\leq$ 0,5 %; auch ($A_3$) ist vorzugsweise weitgehend frei von Aromaten.

Der Anteil an Wachs ($A_3$) kann, im Gemisch aus ($A_1$), ($A_2$) und ($A_3$), relativ hoch sein, beträgt aber vorteilhaft nicht mehr als 2/3 dieses Gemisches; vorteilhaft liegt das Gewichtsverhältnis [($A_1$) + ($A_2$)]/($A_3$) im Bereich von 1/2 bis 10/1, vorzugsweise im Bereich von 1/1 bis 4/1.

Nach einer besonderen Ausführungsform der Erfindung kann dem Wachsgemisch aus ($A_1$) und ($A_2$) oder auch dem Wachsgemisch aus ($A_1$), ($A_2$) und ($A_3$) ein modifiziertes Wachs ($A_4$) zugegeben werden.

Während die Wachse ($A_2$), außer durch die Einführung von Sauerstoff bei ihrer Herstellung und gegebenenfalls einer Teilverseifung, sonst im wesentlichen nicht weiter chemisch modifiziert sind, kommen als Wachse ($A_4$) solche in Betracht, die, vorzugsweise durch Umsetzung mit Polyaminen, kationisch modifiziert sind. Vorteilhaft sind die Wachse ($A_4$) solche, die durch Umsetzung eines gegebenenfalls teilverseiften Fischer-Tropsch Wachses, eines oxydierten Polyäthylenwachses oder eines oxydierten Mikrowachses, mit Nadelpenetration (nach ASTM-D 1321) $\leq$ 20 dmm, Tropfpunkt $\geq$ 80°C und Säurezahl im Bereich von 5 bis 80, mit einem Polyamin, das nur eine primäre Aminogruppe aufweist, amidiert sind und vorzugsweise quaterniert sind. Die für die Herstellung von ($A_4$) eingesetzten oxydierten Kohlenwasserstoffwachse sind vorzugsweise solche, deren Tropfpunkt < 140°C ist und vorzugsweise im Temperaturbereich von 85 bis 130°C liegt, deren Nadelpenetration vorzugsweise im Bereich von 1 bis 10 dmm liegt und deren Säurezahl vorzugsweise im Bereich von 10 bis 60 liegt; die Verseifungszahl liegt vorteilhaft im Bereich von 10 bis 120, vorzugsweise im Bereich von 20 bis 80. Diese Wachse werden vorteilhaft dadurch kationisch modifiziert, daß sie mit Polyaminen umgesetzt werden, die nur eine primäre Aminogruppe enthalten, während die übrigen sekundär oder vorzugsweise tertiär sind; vorteilhaft sind diese Polyamine aliphatische und/oder aromatische Diamine der Formel

$$H_2N\text{-}W\text{-}NRR_o \qquad \text{(II)}$$

worin W einen zweiwertigen Kohlenwasserstoffrest mit 2 bis 8 Kohlenstoffatomen,

R Wasserstoff, $C_{1-24}$-Alkyl, $C_{14-24}$-Alkenyl oder $C_{2-4}$-Hydroxyalkyl

und $R_o$ Wasserstoff, $C_{1-4}$-Alkyl, $C_{2-4}$-Hydroxyalkyl oder Benzyl bedeuten, wobei höchstens eines von R und $R_o$ Wasserstoff ist,

oder R und $R_o$ zusammen mit dem Stickstoffatom, an welches sie gebunden sind, einen Morpholinoring bedeuten.

Als W, welches aromatisch, araliphatisch oder vorzugsweise aliphatisch sein kann, kommen vornehmlich Propylen-1,3 und Äthylen in Betracht, besonders Propylen-1,3. R kann für den Alkylrest eines höheren gesättigten Fettamins oder für den Alkenylrest eines höheren ungesättigten Fettamins stehen, z.B. mit 12 bis 24 Kohlenstoffatomen; als Hydroxyalkylreste, in den Bedeutungen von R und $R_o$, kommen vornehmlich 2-Hydroxypropyl und 2-Hydroxyäthyl in Frage. Besonders bevorzugt stehen die Symbole R und $R_o$ für niedrige Alkylreste mit 1 bis 4 Kohlenstoffatomen, insbesondere für Äthyl oder Methyl. Die Amidierung der oxydierten Wachse mit den genannten monoprimären Polyaminen erfolgt vorteilhaft in solchem Maße, daß die ursprüngliche Säurezahl um mindestens 50 % herabgesetzt wird; vorzugsweise beträgt die Säurezahl des amidierten Wachses Werte, die $\leq$ 20 % der ursprünglichen Säurezahl des carboxygruppenhaltigen, oxydierten und gegebenenfalls teilverseiften Wachses sind. Vorteilhaft werden die so amidierten Wachse noch quaterniert, wobei durch die Quaternierung übliche niedrigmolekulare Reste eingeführt werden können, z.B. Benzyl, β-Hydroxyäthyl oder $C_{1-4}$-Alkyl, vorzugsweise Äthyl oder Methyl; die Quaternierung wird vorzugsweise in solch einem Maße durchgeführt, daß die vorhandenen Aminoamidgruppen zum größten Teil quaterniert werden, besonders bevorzugt so, daß praktisch alle quaternierbaren Aminoamidgruppen quaterniert werden. Die genannten quaternierten Wachse sind bekannt und beispielsweise in der DE-A-36 21 345 beschrieben; auf den Inhalt dieser Offenlegungsschrift wird hier ausdrücklich Bezug genommen.

Wenn ($A_4$) anwesend ist, ist es zweckmäßig in einer kleineren Menge vorhanden, und zwar beträgt dessen Menge vorteilhaft einen Bruchteil der Menge ($A_1$) und ist vorzugsweise auch kleiner als die Menge ($A_2$). Wenn ($A_4$) anwesend ist, liegt das Gewichtsverhältnis ($A_4$)/($A_1$) vorteilhaft im Bereich von 0,5/100 bis 40/100, vorzugsweise im Bereich von 1/100 bis 30/100. Das Gewichtsverhältnis ($A_4$)/($A_2$) ist vorzugsweise $\leq$ 0,5.

Die Wachsgemische (A) werden zur Herstellung der wäßrigen Wachsdispersionen (G) mit Hilfe eines kationischen Dispergiermittelsystems (B) in Wasser dispergiert. Das kationische Dispergiermittelsystem (B) ist durch einen Gehalt an mindestens einem kationaktiven Tensid gekennzeichnet und enthält vorteilhaft neben dem kationaktiven Tensid, welches vorzugsweise deutlich kationisch ist, mindestens ein nicht-ionogenes und/oder schwach kationaktives Tensid.

Vorteilhaft ist (B) ein Gemisch aus den folgenden Tensiden ($B_1$) und ($B_2$):

($B_1$) mindestens einem nicht-ionogenen oder schwach kationischen Dispergator

und ($B_2$) mindestens einem kationischen Tensid der Formel

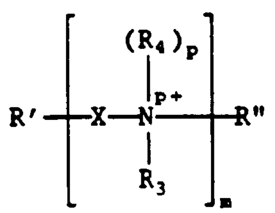 $nA^-$ (I),

worin

R' einen Rest der Formel

$$R_1\text{-CO-NH-} \qquad (\alpha)$$

oder

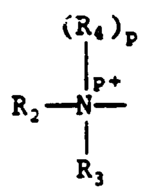 (β),

R" $R_5$ oder -X-R',

$R_1$-CO- den Acylrest einer $C_{10-24}$-Fettsäure,

$R_2$ einen aliphatischen $C_{10-24}$-Kohlenwasserstoffrest,

| | |
|---|---|
| $R_3$ | Wasserstoff, $C_{1-4}$-Alkyl, Benzyl, -Y-OH oder -Z-CO-$NH_2$, |
| $R_4$ | $C_{1-4}$-Alkyl oder Benzyl, |
| $R_5$ | Wasserstoff, $C_{1-4}$-Alkyl, Benzyl, -Y-OH oder -Z-CO-$NH_2$, |
| X | $C_{2-6}$-Alkylen, |
| Y | $C_{2-4}$-Alkylen oder Styren, |
| Z | $C_{1-3}$-Alkylen, |

jeder der Indizes p, unabhängig voneinander, 0 oder 1,

| | |
|---|---|
| m | eine Zahl von 0 bis 2, wenn R' für einen Rest der Formel (β) steht, oder von 1 bis 2, wenn R' für einen Rest der Formel (α) steht, |
| $A^-$ | ein Äquivalent eines Anions |
| und n | die Gesamtzahl positiver Ladungen in ($B_2$) bedeuten, und das, wenn mindestens einer der Indizes p = 0 ist, gegebenenfalls protoniert ist. |

Die Tenside ($B_1$) sind im wesentlichen solche mit Emulgator- bzw. Dispergatorcharakter. Emulgatoren bzw. Dispergatoren mit nicht-ionogenem bzw. schwach-kationaktivem Charakter sind in der Technik zahlreich bekannt und auch in der Fachliteratur beschrieben, so z.B. in M.J. SCHICK "Non-ionic Surfactants" (Band 1, von "Surfactants Science Series", Marcel DECKER Inc., New-York, 1967). Geeignete nicht-ionogene oder schwach-kationaktive Dispergatoren, insbesondere Emulgatoren, ($B_1$) sind vornehmlich Oxalkylierungsprodukte von Fettalkoholen, Fettsäuren, Fettaminen, Fettsäure-mono- oder -dialkanolamiden (worin "alkanol" besonders für "äthanol" oder "isopropanol" steht) oder Fettsäurepartialestern von tri- bis hexafunktionellen aliphatischen Polyolen, wobei als Oxalkylierungsmittel $C_{2-4}$-Alkylenoxyde und gegebenenfalls Styroloxyd in Betracht kommen und mindestens 50 % der eingeführten Oxakyleinheiten Oxäthyleinheiten sind; vorteilhaft sind mindestens 80 % der eingeführten Einheiten Oxäthyleinheiten; am einfachsten sind alle eingeführten Oxalkyleinheiten Oxäthyleinheiten. Die Ausgangsprodukte für die Anlagerung der Oxalkyleinheiten (Fettsäuren, Fettsäure-mono- oder -dialkanolamide, Fettalkohole, Fettamine oder Fettsäurepolyolpartialester) können beliebige, übliche Produkte sein, wie sie zur Herstellung solcher Tenside verwendet werden, vornehmlich solche mit 12 bis 24 Kohlenstoffatomen im Fettrest. Die Fettreste können gesättigt oder ungesättigt, linear oder auch verzweigt sein; es seien beispielsweise folgende Fettsäuren genannt: Laurinsäure, Myristinsäure, Palmitinsäure, Stearinsäure, Ölsäure, Arachidinsäure und Behensäure; als Fettsäure-mono- oder -dialkanolamide können beispielsweise die Mono- oder Dialkanolamide der genannten Säuren erwähnt werden; als Fettamine und Fettalkohole können die Derivate der jeweiligen genannten Fettsäuren bzw. ihrer Amide genannt werden, sowie Synthesealkohole (z.B. Tetramethylnonanol) und verzweigte aliphatische Amine. Als Partialester der genannten Polyole seien beispielsweise die Mono- oder Difettsäureester von Glycerin, Erythrit, Sorbit oder Sorbitan erwähnt, insbesondere die Sorbitan-mono- oder -di-oleate oder -stearate. Als Ausgangsprodukte können beispielsweise auch technische Gemische eingesetzt werden, z.B. Talgfettsäure, technische Sojaölsäure, technische Ölsäure oder Kokosfettsäure und deren Hydrierungs- und/oder Destillationsprodukte sowie die davon derivierten Mono- oder Dialkanolamide, Alkohole, Amine und Polyolpartialester. Von den genannten Produkten sind die oxalkylierten Fettalkohole und die oxalkylierten Fettamine bevorzugt. Unter den genannten Tensiden ($B_1$) sind diejenigen bevorzugt, worin die Fettreste jeweils 14 bis 20, vornehmlich 16 bis 18 Kohlenstoffatome enthalten. Die Oxäthylierungsprodukte sind vorteilhaft Anlagerungsprodukte von 2 bis 25, vorzugsweise 2 bis 15, insbesondere 3 bis 12 Mol Äthylenoxyd an 1 Mol Ausgangsprodukt (Fettsäure, Fettalkohol, Fettamin, Fettsäure-mono- oder -di-alkanolamid oder -polyolpartialester).

Die Tenside ($B_2$) haben deutlich kationischen Charakter und sind insbesondere stärker kationisch als allfällige schwach kationaktive Dispergatoren ($B_1$), sie weisen also im wesentlichen eine höhere Ladungsdichte und/oder Polarität auf, d.h. sie sind weniger oder nicht oxalkyliert und/oder enthalten mehr als einen kationaktiven (d.h. basischen, protonierten und/oder quaternierten) Stickstoff pro Fettrest und/oder sind mindestens teilweise quaterniert.

Als Reste $R_1$-CO- und $R_2$ kommen vorteilhaft solche mit 12 bis 24, vorzugsweise 14 bis 20 Kohlenstoffatomen in Betracht, vornehmlich wie oben zu ($B_1$) beschrieben.

Y steht vorteilhaft für Äthylen oder Propylen-1,2.

Z steht vorteilhaft für Methylen, Äthylen oder Propylen-1,2.

Der Rest X kann für beliebige aliphatische Reste mit 2 bis 6 Kohlenstoffatomen stehen, wie sie in aliphatischen Di- und Polyaminen vorkommen, insbesondere Äthylen, Propylen, Butylen oder Hexamethylen, worunter Äthylen und Propylen-1,3 bevorzugt sind.

Als $C_{1-4}$-Alkylreste, in der Bedeutung von $R_3$, $R_4$ und $R_5$, kommen im allgemeinen beliebige solche Alkylreste in Betracht, wie sie durch Alkylierung bzw. Quaternierung in das Molekül eingeführt werden können, vorzugsweise Methyl oder Äthyl.

$A^-$ ist ein Äquivalent eines Gegenions zu den in der Formel (I) vorkommenden jeweiligen kationischen Ladungen, vornehmlich solch ein Anion wie es durch Quaternierung zur Einführung der jeweiligen Reste entsteht und/oder durch

Protonierung oder Ionenaustausch eingeführt werden kann, z.B. für Halogenid (vorzugsweise Chlorid), Sulfat, Methosulfat, Äthosulfat, Tosylat oder das Anion einer niedrigmolekularen aliphatischen Carbonsäure (insbesondere mit 1 bis 4 Kohlenstoffatomen, z.B. Formiat, Acetat, Propionat, Lactat, Tartrat, Oxalat oder Citrat).

Vorteilhaft ist ($B_2$) ein Tensid oder Tensidgemisch, das mindestens teilweise quaterniert ist, d.h. worin in mindestens einem Teil der Verbindungen mindestens ein Index p = 1 ist. Vorzugsweise ist ($B_2$) ein Gemisch aus

($B_{21}$) mindestens einer Verbindung der Formel (I), worin $\Sigma p = 0$ ist,

und ($B_{22}$) mindestens einer Verbindung der Formel (I), worin $\Sigma p \geq 1$ ist, $R_3$ $C_{1-4}$-Alkyl, Benzyl, -Z-CO-$NH_2$ oder -Y-OH bedeutet, und, wenn R" $R_5$ bedeutet, $R_5$ für $C_{1-4}$-Alkyl, Benzyl, -Y-OH oder -Z-CO-$NH_2$ steht, und worin, bezogen auf die gesamten Fettreste $R_1$ und $R_2$, pro Fettrest 0,5 bis 2 quaternäre Gruppen der Formel

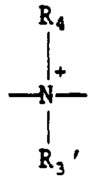

(γ),

worin $R_3$' $C_{1-4}$-Alkyl, Benzyl, -Y-OH oder -Z-CO-$NH_2$ bedeutet, enthalten sind.

Die Verbindungen der Formel (I) sind bekannte Verbindungen oder können analog zu bekannten Methoden hergestellt werden. Die Verbindungen der Formel (I), worin mindestens eines von $R_3$ und R" eine von Wasserstoff verschiedene Bedeutung aufweist, können insbesondere dadurch hergestellt werden, daß man in mindestens eine Verbindung der Formel

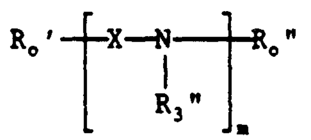

(Ia),

worin $R_o$' einen Rest der Formel (α) oder $R_2$-N($R_3$")-,
$R_o$" $R_5$" oder -X-$R_o$',
$R_3$" Wasserstoff, -Y-OH oder $C_{1-4}$-Alkyl
und $R_5$" Wasserstoff, -Y-OH oder $C_{1-4}$-Alkyl

bedeuten, wobei mindestens eines von $R_3$" und $R_o$" für Wasserstoff steht, einen von Wasserstoff verschiedenen Rest R" bzw. mindestens einen von Wasserstoff verschiedenen Rest $R_3$ einführt und $\Sigma p$ Gruppen $R_4$ einführt. $\Sigma p$ bedeutet die Gesamtzahl der in der Formel (I) vorhandenen Reste $R_4$.

Die Verbindungen der Formel (Ia), worin $R_o$' für einen Rest der Formel (α) steht, können dadurch hergestellt werden, daß man mindestens ein Amin der Formel

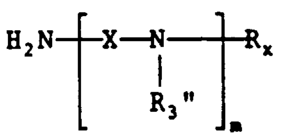

(Ib),

worin $R_x$ $R_5$, -X-N($R_3$")$R_2$ oder -X-N($R_3$")H bedeutet, wobei $R_5$ nicht Wasserstoff bedeutet,
mit einer Säure $R_1$-COOH oder einem funktionellen Derivat davon, z.B. dem Chlorid, acyliert.

Für die Herstellung von Verbindungen ($B_{22}$) werden zweckmäßig Verbindungen vom Typus ($B_{21}$) mit $R_4$-abgebenden Verbindungen quaterniert.

Unter den Tensiden ($B_2$) sind besonders diejenigen bevorzugt, worin R' für einen Rest der Formel (α) steht und R" $R_5$ bedeutet und insbesondere solche worin m = 1 ist.

Die bevorzugten quaternierten Aminoamide ($B_{22}$), worin R' einen Rest der Formel (α) bedeutet, m = 1 ist und R" $R_5$ bedeutet, wobei $R_3$ $C_{1-4}$-Alkyl oder -Y-OH, $R_4$ $C_{1-4}$-Alkyl oder Benzyl und $R_5$ $C_{1-4}$-Alkyl, Benzyl oder -Y-OH bedeuten, können z.B. so hergestellt werden, wie in der oben erwähnten DE-A-36 21 345 beschrieben.

$\Sigma p$ ist vorzugsweise nicht größer als 2, besonders bevorzugt = 1.

Vorteilhaft ist mindestens ein Teil der in (B) vorkommenden basischen Aminogruppen protoniert.

Das Gewichtsverhältnis ($B_1$)/($B_2$) liegt vorteilhaft im Bereich von 6/1 bis 1/3, vorzugsweise 4/1 bis 1/1.

Das Gewichtsverhältnis $(B_{21})/(B_{22})$ liegt vorteilhaft im Bereich von 1/5 bis 4/1, vornehmlich 1/4 bis 4/1, vorzugsweise 1/3 bis 2/1.

Das Gewichtsverhältnis der gesamten Dispergiermittel (B) zu den gesamten Wachsen (A) wird zweckmäßig so gewählt, daß eine feinteilige wäßrige Dispersion entsteht. Vorteilhaft liegt das Gewichtsverhältnis (B)/(A) im Bereich von 1/10 bis 6/10, vorzugsweise 2/10 bis 5/10.

Die Tenside (B) können als reine oder technische Verbindungen eingesetzt werden und können gegebenenfalls Lösungsmittel (insbesondere mit Wasser mischbare Lösungsmittel) und/oder Katalysatoren aus ihrer Herstellung [z. B. für $(B_{22})$ aus der Quaternierung] enthalten.

Gegebenenfalls können die erfindungsgemäßen wäßrigen Wachsdispersionen (G) weitere Zusätze enthalten, insbesondere

(C) mindestens ein weichmachendes und/oder antistatisches Hilfsmittel und/oder

(D) ein Konservierungsmittel oder/und einen Entschäumer.

Als Antistatika und/oder Weichmacher (C) kommen im allgemeinen übliche Substanzen in Betracht, wie sie dafür in der Textilindustrie verwendet werden, insbesondere gegebenenfalls quaternierte Aminoderivate, die mindestens einen lipophilen Rest und gegebenenfalls eine Ester- oder Amidgruppe enthalten und gegebenenfalls sulfomethyliert und/oder carboxymethyliert sein können. Besonders erwähnenswerte Verbindungen vom Typus (C) sind Umsetzungsprodukte von Fettsäuren, beispielsweise solchen wie oben beschrieben, mit Alkylendiaminen oder Dialkylentriaminen oder noch mit Alkanolaminen oder Alkanolaminoalkylaminen, insbesondere mit β-(β'-Hydroxyäthylamino)--äthylamin, vorzugsweise im Molverhältnis 1/1 bis 2/1.

Als (D) kommen als Konservierungsmittel insbesondere Fungizide und Bakterizide in Betracht, vornehmlich solche, wie sie üblicherweise in wäßrigen Wachspräparaten oder Avivagemitteln eingesetzt werden. Als Entschäumer kommen im wesentlichen Silikonentschäumer in Betracht.

Die erfindungsgemäßen wäßrigen Wachsdispersionen (G) sind vorzugsweise im wesentlichen frei von anderen Wachsen als die obengenannten.

Gegebenenfalls können die erfindungsgemäßen wäßrigen Wachsdispersionen (G) zusätzlich
(E) mindestens ein amphoteres Tensid
enthalten. Als amphotere Tenside (E) kommen insbesondere anionische Modifikationen von kationischen Tensiden in Betracht, vornehmlich von solchen vom Typus der Tenside $(B_2)$, vorzugsweise $(B_{21})$. Besonders erwähnenswert sind anionische Modifikationen von Verbindungen der Formel (Ia'), d.h. der Formel (Ia) worin aber mindestens eines von $R_3$" und $R_o$" für -Y-OH steht und die Symbole $R_3$" und $R_5$" gegebenenfalls alle ≠ H sein können. Die anionische Modifikation kann auf an sich bekannte Weise erfolgen, z.B. dadurch daß alkoholische Hydroxygruppen durch Einführung eines Mineralsäurerestes, insbesondere einer Sulfato- oder Phosphatogruppe, oder Monoacylierung mit einer aliphatischen Dicarbonsäure (z.B. $C_{3'-8'}$) verestert werden oder daß Verbindungen der Formel (Ia) oder (Ia'), die mindestens einen reaktiven Wasserstoff (-OH oder =NH) enthalten, durch Einführung eines Sulfoalkyl- oder Carboxyalkylrestes (z.B. Sulfomethyl, -äthyl oder -propyl, Carboxymethyl, -äthyl oder -propyl) oder stufenweise durch Umsetzung erst mit Epichlorhydrin und dann z.B. mit Sulfit (z.B. Natriumbisulfit oder $SO_2$) oder Veresterung, analog wie oben beschrieben, anionisch modifiziert werden.

Die bevorzugte Menge an (E) ist weitgehend durch die Kationizität und Menge der kationaktiven Komponenten, im wesentlichen (B) und (C), bedingt. Wenn (E) eingesetzt wird, liegt das Gewichtsverhältnis (E)/[(B) + (C)] vorteilhaft im Bereich von 2/100 bis 120/100, vorzugsweise 10/100 bis 100/100.

Die oben genannten Tenside sind ausreichend und bestens geeignet um Dispersionen (G) hervorragender Beständigkeit und Wirksamkeit herzustellen und die Anwesenheit anderer Tenside ist nicht erforderlich und insbesondere auch nicht erwünscht.

Die Komponente (D), wenn zugegeben, wird zweckmäßig in möglichst kleiner Menge eingesetzt, vornehmlich in einer Menge die < 1 %, vorzugsweise < 0,5 % bezogen auf die gesamte Dispersion (G), besonders bevorzugt in einer Menge < 1 % bezogen auf die gesamten Wachse (A).

Die erfindungsgemäßen wäßrigen Wachsdispersionen (G) können im allgemeinen in einer beliebigen Konzentration vorliegen, wie sie für die Handhabung geeignet ist; vorteilhaft weisen die wäßrigen Wachsdispersionen (G) einen Trockenstoffgehalt von 5 bis 60 Gew.-%, vorzugsweise 10 bis 50 Gew.-% auf.

Der pH der wäßrigen Dispersionen (G) liegt vorteilhaft im Bereich von 3 bis 7, vorzugsweise 3,5 bis 6,5.

Die wäßrigen Dispersionen (G) können auf einfache Weise hergestellt werden, z.B. durch Vermischen der jeweiligen dispergierten Komponenten oder durch Mischen der jeweiligen geschmolzenen Komponenen mit Wasser, insbesondere dadurch, daß man die gemischten geschmolzenen Komponenten $(A_1)$ und $(A_2)$ und (B) mit Wasser mischt und erforderlichenfalls den pH auf den gewünschten Wert, zweckmäßig durch Säurezugabe, einstellt.

Wenn die wäßrige Wachsdispersion (G) auch ein Wachs $(A_3)$ enthält, wird dieses vorteilhaft zusammen mit $(A_1)$,

($A_2$) und (B) geschmolzen und mit Wasser gemischt, wonach erforderlichenfalls der pH eingestellt wird. Für die pH-Einstellung eignen sich im allgemeinen übliche Säuren, z.B. Mineralsäuren (Schwefelsäure, Phosphorsäure oder Salzsäure) oder niedrigmolekulare aliphatische Carbonsäuren, z.B. mit 1 bis 4 Kohlenstoffatomen (z.B. Ameisensäure, Essigsäure, Propionsäure, Weinsäure, Milchsäure, Oxalsäure oder Zitronensäure).

Wenn die wäßrige Wachsdispersion (G) auch ein Wachs ($A_4$) enthalten soll, wird dieses vorteilhaft nachträglich zugegeben, d.h. wenn ($A_1$) und ($A_2$) und, wenn vorhanden, auch ($A_3$) bereits in dispergierter Form vorliegen. Vorzugsweise wird ($A_4$) in Form einer wäßrigen Dispersion zugegeben, die mit Hilfe von Tensid vom Typus ($B_{22}$) dispergiert ist und gegebenenfalls einen kleinen Anteil an Wachs ($A_2$) oder/und gegebenenfalls einen Anteil der Wachse ($A_3$) enthalten kann; solche Dispersionen sind in der DE-A-36 21 345 beschrieben.

Wenn die erfindungsgemäßen Wachsdispersionen (G) auch eine Komponente (C) als Weichmacher bzw. Antistatikum enthalten sollen, wird diese vorteilhaft erst dann zugegeben, wenn mindestens soviel Wasser zugegeben worden ist, daß die Wachse ($A_1$) und ($A_2$) und, soweit vorhanden auch ($A_3$), bereits in dispergierter Form vorliegen.

Hierzu ist zu bemerken, daß die Definition der Antistatika bzw. Weichmacher (C) sich z.T. mit der Definition von Tensiden ($B_2$) oder gegebenenfalls auch ($B_1$) überlappen kann, aber die dispergierende Wirkung von (B), insbesondere zur Herstellung feinteiliger und stabiler Dispersionen, im wesentlichen dann zum Tragen kommt, wenn (B) zusammen mit ($A_1$) und ($A_2$) und, soweit vorhanden, auch mit ($A_3$) geschmolzen worden ist, so daß mit Wasser und gegebenenfalls Säure eine feinteilige wäßrige Dispersion entsteht; die weichmachende Wirkung bzw. die antistatische Wirkung von (C) kommt dagegen im wesentlichen dann zum Tragen, wenn (C) erst nach erfolgter Dispergierung von (A) zugegeben wird.

Zweckmäßig werden die Wachse ($A_1$) und ($A_2$) und, soweit vorhanden, auch ($A_3$) bis zu solch einer Temperatur geschmolzen, die mindestens dem Schmelzbereich des höchstschmelzenden Wachses entspricht; die Tenside (B) werden zweckmäßig mit den geschmolzenen Wachsen ($A_1$) und ($A_2$) bzw. ($A_3$) vermischt; die Verdünnung mit dem Wasser erfolgt vorteilhaft durch Eingießen der Schmelze in heißes Wasser (vorteilhaft von einer Temperatur die derjenigen der Schmelze möglichst nahe kommt, insbesondere im Bereich von 80 bis 100°C, vorzugsweise 85 bis 98°C), die allfälligen übrigen (A)-Komponenten, insbesondere ($A_4$)-Dispersionen, werden vorteilhaft auch in das heiße Wasser bzw. in die noch heiße Dispersion gegeben. Nach erfolgter Dispergierung in der Wärme kann die erhaltene Dispersion auf geeignete Weise nach an sich üblichen Methoden abgekühlt werden, z.B. durch äußere Kühlung und/oder innere Kühlung (z.B. durch Eiszugabe). Falls eine Komponente (C), (D) oder/und (E) zugegeben wird, kann diese auch der bereits erkalteten Dispersion zugegeben werden. Eine Säure zur pH-Einstellung kann z.B. vor oder/und nach der Wachszugabe zugegeben werden.

Die eingesetzte Menge (C) kann je nach gewünschtem entsprechendem Weichgriff bzw. gewünschter antistatischer Wirkung stark variieren. Das Gewichtsverhältnis (C)/(A) liegt vorteilhaft im Bereich von 0 bis 50/100, vorzugsweise 0 bis 30/100. Besonders ausgeprägte Beeinflussungen des Weichgriffes werden z,B. bei Gewichtsverhältnissen (C)/(A) im Bereich von 1/20 bis 1/2, besonders 1/10 bis 3/10 erzielt. Da die erfindungsgemäßen Wachsdispersionen allerdings auch ohne die Zugabe von (C) dem Substrat bereits einen angenehmen Griff verleihen, können auch ohne (C) oder mit nur minimen Anteilen an (C) sehr angenehme und wirksame Ausrüstungen erhalten werden.

(E) kann zu einem beliebigen Zeitpunkt vor oder/und nach der Dispergierung von (A) zugegeben werden. Vorteilhaft wird (E) erst dann zugegeben, wenn die Wachse ($A_1$) und ($A_2$) und, soweit vorhanden, auch ($A_3$) und gegebenenfalls ($A_4$), in Wasser mit Hilfe von (B) dispergiert sind.

Es können sehr stabile und feinteilige Dispersionen (G) hergestellt werden, insbesondere solche, worin der Durchmesser der dispergierten (A)-Teilchen < 10 μm ist, vornehmlich im Bereich von 0,1 bis 5,0 μm liegt, vorteilhaft worin ein wesentlicher Teil (vorteilhaft mindestens 30 Gew.-%, vorzugsweise mindestens 50 Gew.-%) der dispergierten Teilchen einen Durchmesser im Bereich von 0,5 bis 5 μm aufweist. Die Dispersionen (G) sind lagerbeständig und können direkt für den Gebrauch verwendet werden; sie lassen sich einwandfrei mit Wasser verdünnen. Die (E)-haltigen Dispersionen (G) zeichnen sich besonders auch durch ihre hohe Unempfindlichkeit auf anionische Bestandteile oder Verunreinigungen der Flotten, z.B. aus einer vorhergehenden Behandlung der Substrate, aus.

Die erfindungsgemäßen Wachsdispersionen (G) dienen als Ausrüstungsmittel, namentlich Avivagemittel für Fasermaterial zum Zwecke der Erhöhung der Gleitfähigkeit der trockenen oder nahezu trockenen Gespinste und insbesondere der Fäden, die aus solchen Fasern bestehen, sowohl untereinander als auch auf Apparateteilen, die bei ihrer Verarbeitung verwendet werden. Zur Ausrüstung können die Fasern in einer beliebigen Form vorliegen, wie sie vor oder nach dem Spinnen vorkommen und üblicherweise zum Avivieren eingesetzt werden, z.B. als Spinnfasern (Flocke, Kammzug, Spinnkabel), als einfache oder mehrfache Garne (auch Zwirne) und gegebenenfalls als daraus hergestellte Textilien (Gevebe, Gewirke, Vliese, Halbfertig- oder Fertigware). Besonders bevorzugt werden die erfindungsgemäßen Dispersionen (G) zur Avivage von Fäden, insbesondere einfachen Garnen oder mehrfachgezwirnten Garnen (vor allem als sogenannte Garnavivage) eingesetzt, um deren Weiterverarbeitung nach dem Spinnen, insbesondere vor und bei der maschinellen, im wesentlichen trockenen, Weiterverarbeitung, z.B. beim Winden, Weben, Wirken oder maschinellen Sticken, zu erleichtern. Die Fasern können aus beliebigen üblichen Materialien bestehen, wie sie in der Textilindustrie, insbesondere in der Spinnerei vorkommen, z.B. Fasern vegetabiler oder tierischer Herkunft, insbesondere gegebenenfalls modifizierte Cellulose (Baumwolle, Leinen, Viskoserayon, Hanf, Ramier, Werg), natürliche oder synthetische Polyamide (gegebenenfalls antifilz-behandelte - z.B. hercosettisierte - Wolle, Seide, synthetische Polyamide), Polyester, Polyurethane, Polyacrylnitril (kationisch oder anionisch modifiziert) und Polyolefinfasern. Kunstfasern können auch texturiert sein und/oder als Mikrofasern vorliegen.

Die erfindungsgemäßen Wachsdispersionen (G) können nach beliebigen üblichen Methoden auf die Substrate appliziert werden, z.B. durch Imprägnierverfahren (z.B. durch Tauchen, Klotzen, Walzenauftrag, Aufsprühen) oder nach Ausziehverfahren. Für das Ausziehverfahren können die Flotten verschiedener Länge sein, so wie es für das Verfahren erforderlich ist, beispielsweise 1:1 bis 1:120, insbesondere 1:5 bis 1:60; das Ausziehverfahren erfolgt vorteilhaft bei Temperaturen ≤ 80°C, vorzugsweise im Bereich von 25 bis 75, insbesondere 30 bis 50°C; der pH der Behandlüngsflotten liegt vorteilhaft im Bereich von 4 bis 8, vorzugsweise 5 bis 7, und kann erforderlichenfalls durch Zugabe geeigneter, üblicher Säuren und/oder Puffer eingestellt werden, z.B. durch Zugabe von niedrigmolekularen Carbonsäuren (beispielsweise wie oben erwähnt) oder von Puffern (zum Beispiel Natriumhydrogenphosphat oder Ammoniumsulfat). Die erfindungsgemäßen Wachsdispersionen (G) können gewünschtenfalls vor der Formulierung der Applikationsflotten zu Stammdispersionen vorverdünnt werden oder auch direkt in die Flotten zudosiert werden. Sie werden vorteilhaft in solchen Mengen eingesetzt, die einer Konzentration von 0,1 bis 5 %, vorzugsweise 0,2 bis 1,2 % Wachsgemisch (A), bezogen auf trockenes Substratgewicht, entsprechen. Die erfindungsgemäße Ausrüstung mit (G) kann sich vorteilhaft direkt an eine vorhergehende Behandlung anschließen, z.B. an eine Färbung, optische Aufhellung und/oder Bleiche, u.zw. auch ohne Zvischentrocknung. Das Substrat kann insbesondere in Form von Spulen (z.B. Kreuzspulen), von Strängen oder Docken oder auch im kontinuierlichen Lauf (z.B. in einer Garnpassiermaschine, auf einer Übertragungswalze oder Galette oder in einer Garnspritzfärbemaschine) mit den erfindungsgemäßen Dispersionen (G) behandelt werden. Die behandelte Ware kann nach üblichen Methoden getrocknet werden, z.B. mit Warmluft; vorteilhaft bei Temperaturen > 98°C, vorzugsweise bei Temperaturen im Bereich von 100 bis 130 °C, insbesondere 102 bis 120°C, gegebenenfalls in Gegenwart von Dampf, oder mit Hochfrequenzwellen (Radiowellen) oder noch durch IR--Bestrahlung.

Durch die erfindungsgemäße Ausrüstung mit (G) wird die dynamische Reibung der ausgerüsteten Ware wesentlich herabgesetzt, während die statische Reibung der Fasern auf einem hohen Niveau bleibt, so daß behandelte Fasern und insbesondere avivierte Fäden optimaler Gleitfähigkeit und Strukturbeständigkeit erhältlich sind, die für die maschinelle trockene Weiterverarbeitung, insbesondere für das Winden, Weben und Wirken, sowie für das maschinelle Sticken, hervorragend geeignet sind, wobei auch der Weichgriff verbessert werden kann. Die erfindungsgemäße Ausrüstung ist insbesondere auch beständig gegen die verschiedenen mechanischen und thermischen Beanspruchungen, denen die ausgerüsteten Fäden unterworfen werden, z.B. Reibungen der Fäden an verschiedenen Teilen der Apparatur (z.B. Fadenführungsringen oder Walzen oder noch sonstigen Fadenführungssystemen) oder Faden gegen Faden (z. B. beim Spulen, Rückspulen, Umspulen, Wirken, Weben oder maschinellen Sticken), Spannungen, Vibrationen oder Beugungen, bei den verschiedenen Laufwegen der Fäden und bei verschiedenen Geschwindigkeiten, sowie Temperaturänderungen oder -schwankungen in verschiedenen Abschnitten oder Teilen der Apparatur. Es kann also die Leistungsfähigkeit der verwendeten Apparatur optimal ausgenutzt werden. Die aus den behandelten Fäden hergestellten Textilmaterialien, insbesondere Gewebe und Gewirke, sind durch die verwendete Ausrüstung der Fäden für ihre Herstellung auch mit einer verbesserten Gleitfähigkeit versehen, so daß deren maschinelle Verarbeitbarkeit, insbesondere Vernähbarkeit, auch entsprechend verbessert ist. Die erfindungsgemäße Ausrüstung zeichnet sich durch ihre mechanische und thermische Permanenz aus und kann aber auch, gewünschtenfalls, durch einige Waschgänge praktisch vollständig ausgewaschen werden. Die erfindungsgemäße Ausrüstung ist mit anderen Ausrüstungsmitteln auf der Basis von mit Hilfe nicht-ionogener und/oder kationaktiver Tenside dispergierten Wachsen kompatibel und die aus den erfindungsgemäß ausgerüsteten Fäden hergestellte Ware kann gewünschtenfalls mit solchen Wachsdispersionen weiter ausgerüstet werden, ohne daß die erfindungsgemäße Ausrüstung entfernt werden muß. Beispiele solcher besonders geeigneter Wachsdispersionen sind diejenigen, die in den Deutschen Offenlegungsschriften DE-A-36 21 345, DE-A-30 03 851 und DE-A-35 19 337 beschrieben sind. Die färberischen und physikalischen Eigenschaften der Substrate sind praktisch nicht beeinträchtigt.

In den folgenden Beispielen bedeuten die Teile Gewichtsteile und die Prozente Gewichtsprozente, die Temperaturen sind in Celsiusgraden angegeben.

Die dynamische Reibung der in den Applikationsbeispielen ausgerüsteten Garne wird auf einem ROTSCHILD F-Meter L-1188 (elektronisches Meßgerät zur selbsttätigen Messung des Reibungskoeffizienten) ermittelt; die Errechnung der Reibungskoeffizienten erfolgt nach der Eytelwein'schen Formel:

$$\frac{S_2}{S_1} = e^{\mu \cdot \alpha}$$

worin $S_1$ die Fadenspannung vor der Reibstelle,
$S_2$ die Fadenspannung nach der Reibstelle,

| | |
|---|---|
| $\alpha$ | die Ablenkung des Garnes aus der ursprünglichen Laufrichtung in Winkelgrad angegeben |
| und $\mu$ | den dynamischen Reibungskoeffizienten |

bedeuten.

Die in den Beispielen eingesetzten Dispersionskomponenten (A), (B), (C) und (E) sind wie folgt:

<u>Wachse ($A_1$), ($A_2$), ($A_3$) und ($A_4$)</u>:

($A_{11}$) Hartparaffin mit Schmelzbereich 90-95°C und Nadelpenetration nach ASTM-D 1321 = 7 bis 11 dmm;
($A_{12}$) Hartparaffin mit Schmelzbereich 88-93°C und Nadelpenetration nach ASTM-D 1321 = 10 bis 15 dmm;
($A_{21}$) teilverseiftes Fischer-Tropsch Wachs mit Schmelzbereich 105-115°C, Nadelpenetration nach ASTM-D 1321 = 2 bis 3 dmm, Säurezahl 10-14 und Verseifungszahl 22-23;
($A_{22}$) oxydiertes Polyäthylen, teilverseift, mit Schmelzbereich 103-108°C, Nadelpenetration nach ASTM-D 1321 = 1 bis 3 dmm, Säurezahl 22-26 und Verseifungszahl 47-52;
($A_{23}$) oxydiertes Polyäthylen mit Schmelzbereich 102-106°C, Nadelpenetration nach ASTM-D 1321 = 2 dmm, Säurezahl 15 und Verseifungszahl 24-26;
($A_{24}$) oxydiertes Mikrowachs mit Schmelzbereich 95-98°C, Nadelpenetration nach ASTM-D 1321 = 2 dmm, Säurezahl 12,5 und Verseifungszahl 30;
($A_{31}$) Paraffin vollraffiniert mit Schmelzbereich 54-56°C und Nadelpenetration nach ASTM-D 1321 = 13 dmm;
($A_{41}$) oxydiertes Polyäthylen mit Tropfpunkt 103°C, Säurezahl 25 und Dichte bei 20°C = 0,96, umgesetzt mit der stöchiometrischen Menge (auf Säurezahl bezogen) Dimethylaminopropylamin zur Amidierung und Dimethylsulfat zur Quaternierung.

<u>Tenside ($B_1$), ($B_{21}$) und ($B_{22}$)</u>:

($B_{11}$) Anlagerungspunkt von 5 Mol Äthylenoxyd an 1 Mol Oleylalkohol;
($B_{12}$) Anlagerungspunkt von 10 Mol Äthylenoxyd an 1 Mol Oleylalkohol;
($B_{211}$) kationaktives Tensid der Formel

$$C_{17}H_{35}\text{-CO-NH-}CH_2\text{-}CH_2\text{-}CH_2\text{-N}(CH_3)_2;$$

($B_{221}$) kationisches Tensid der Formel

$$C_{17}H_{35}\text{-CO-NH-}CH_2\text{-}CH_2\text{-}CH_2\text{-}N^+(CH_3)_3\ CH_3\text{-O-}SO_3^-.$$

<u>Hilfsmittel (C)</u>:

($C_1$) Kondensationsprodukt aus 1,7 Mol Stearinsäure und 1 Mol N-($\beta$-Hydroxyäthyl)-äthylendiamin, mit Essigsäure protoniert.

<u>Tensid (E)</u>:

($E_1$) Amphoteres Tensid der Formel

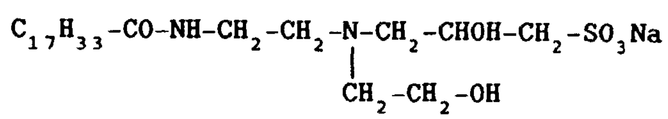

.

<u>Dispersion (J)</u>:

Wäßrige Dispersion bestehend aus

10 % Paraffin ($A_{31}$)
10 % Wachs ($A_{41}$)
5 % Dispergator ($B_{221}$)
Rest Wasser

BEISPIEL 1

375,0 Teile Paraffinwachs ($A_{31}$), 225,0 Teile Emulgator ($B_{11}$), 375,0 Teile Paraffinwachs ($A_{11}$) und 187,5 Teile Synthesewachs ($A_{21}$) werden bei 105-110°C geschmolzen und mit 45 Teilen Dispergator ($B_{211}$) versetzt. Der erhaltenen Schmelze werden 67,9 Teile Dispergator ($B_{221}$), gelöst in 29,1 Teilen 1,2-Propylenglykol (aus der Quaternierung), zugegeben. Die entstandene klare Mischung wird nun bis auf 110-115°C erwärmt und in 1595,0 Teile entmineralisiertes Wasser von 95°C, dem 7,5 Teile Eisessig zugegeben worden sind, eingegossen. Dann werden 750,0 Teile Eis zugegeben und das Gemisch wird bis auf Raumtemperatur abgekühlt. Bei Raumtemperatur werden noch 731,4 Teile einer 25 %-igen wäßrigen Dispersion von ($C_1$) zugegeben. Man erhält eine Dispersion ($G_1$) mit sehr guten Garnavivageeigenschaften.

BEISPIEL 2

Man verfährt wie im Beispiel 1, mit dem Unterschied, daß anstelle des Wachses ($A_{11}$) die gleiche Menge Wachs ($A_{12}$) eingesetzt wird. Man erhält eine Dispersion ($G_2$) mit sehr guten Garnavivageeigenschaften.

BEISPIEL 3

Man verfährt wie im Beispiel 1, mit dem Unterschied, daß anstelle des Wachses ($A_{21}$) die gleiche Menge an Wachs ($A_{22}$) eingesetzt wird. Man erhält eine Dispersion ($G_3$) mit sehr guten Garnavivageeigenschaften.

BEISPIEL 4

Man verfährt wie im Beispiel 1, mit dem Unterschied, daß anstelle des Wachses ($A_{21}$) die gleiche Menge an Wachs ($A_{23}$) eingesetzt wird. Man erhält eine Dispersion ($G_4$) mit sehr guten Garnavivageeigenschaften.

BEISPIEL 5

Man verfährt wie im Beispiel 1, mit dem Unterschied, daß anstelle des Wachses ($A_{21}$) die gleiche Menge an Wachs ($A_{24}$) eingesetzt wird. Man erhält eine Dispersion ($G_5$) mit sehr guten Garnavivageeigenschaften.

BEISPIEL 6

375 Teile Paraffinwachs ($A_{31}$), 225,0 Teile Emulgator ($B_{11}$), 375,0 Teile Paraffinwachs ($A_{12}$) und 187,5 Teile Synthesewachs ($A_{21}$) werden bei 105-110°C geschmolzen und mit 45,0 Teilen Dispergator ($B_{211}$) gemischt. Nun werden der Schmelze noch 67,7 Teile Dispergator ($B_{221}$), gelöst in 29,1 Teilen 1,2-Propylenglykol (aus der Quaternierung), zugegeben und die entstandene klare Schmelze von 110-115°C wird in 1597,5 Teile entmineralisiertes Wasser von 95°C zufließen gelassen. Nun werden der entstandenen Dispersion 187,5 Teile Dispersion (J) zugefügt und es wird die Kühlung eingeschaltet. Bei 85°C werden 7,5 Teile Eisessig und 562,5 Teile Eis zugegeben und es wird weiter bis auf Raumtemperatur abgekühlt. Bei Raumtemperatur werden noch 731,9 Teile einer 25 %-igen wäßrigen Dispersion von ($C_1$) zugegeben. Man erhält eine sehr feine Dispersion ($G_6$) mit sehr guten Garnavivageeigenschaften.

BEISPIEL 7

375 Teile Paraffinwachs ($A_{31}$), 225,0 Teile Emulgator ($B_{11}$), 375,0 Teile Paraffinwachs ($A_{12}$) und 187,5 Teile Synthesewachs ($A_{21}$) werden bei 105-110°C geschmolzen und mit 45,0 Teilen Dispergator ($B_{211}$) gemischt. Nun werden der Schmelze noch 67,7 Teile Dispergator ($B_{221}$), gelöst in 29,1 Teilen 1,2-Propylenglykol (aus der Quaternierung), zugegeben und die entstandene klare Schmelze von 110-115°C wird in 1597,5 Teile entmineralisiertes Wasser von 95°C zufließen gelassen. Nun werden der entstandenen Dispersion 7,5 Teile Eisessig und dann 750 Teile Dispersion (J) zugefügt; nun wird die Kühlung eingeschaltet und es wird bis auf Raumtemperatur abgekühlt. Bei Raumtemperatur werden noch 731,9 Teile einer 25 %-igen wäßrigen Dispersion von ($C_1$) zugegeben. Man erhält eine sehr feine Dispersion ($G_7$) mit sehr guten Garnavivageeigenschaften.

BEISPIEL 8

Man verfährt wie im Beispiel 6 beschrieben, mit dem Unterschied, daß in die Dispersion ($G_6$) bei Raumtemperatur 263,5 Teile einer 50 %-igen wäßrigen Verdünnung von ($E_1$) eingerührt werden. Man erhält eine sehr feine Dispersion ($G_8$) mit sehr guten Garnavivageeigenschaften.

BEISPIEL 9

375 Teile Paraffinwachs ($A_{31}$), 225,0 Teile Emulgator ($B_{11}$), 22,5 Teile Emulgator ($B_{12}$), 375,0 Teile Paraffinvachs ($A_{12}$) und 187,5 Teile Synthesewachs ($A_{21}$) werden bei 105-110°C geschmolzen und mit 45,0 Teilen Dispergator ($B_{211}$) gemischt. Nun werden der Schmelze noch 67,7 Teile Dispergator ($B_{221}$), gelöst in 29,1 Teilen 1,2-Propylenglykol (aus der Quaternierung), zugegeben und die entstandene klare Schmelze von 110-115°C wird in 1597,5 Teile entmineralisiertes Wasser von 95°C zufließen gelassen. Nun werden der entstandenen Dispersion 187,5 Teile Dispersion (J) zugefügt und es wird die Kühlung eingeschaltet. Bei 85°C werden 7,5 Teile Eisessig und 562,5 Teile Eis zugegeben und es wird weiter bis auf Raumtemperatur abgekühlt. Bei Raumtemperatur werden noch 73,5 Teile einer 25 %-igen wäßrigen Dispersion von ($C_1$) zugegeben. Man erhält eine sehr feine Dispersion ($G_9$) mit sehr guten Garnavivageeigenschaften.

BEISPIEL 10

375 Teile Paraffinwachs ($A_{31}$), 225,0 Teile Emulgator ($B_{11}$), 22,5 Teile Emulgator ($B_{12}$), 375,0 Teile Paraffinwachs ($A_{12}$) und 187,5 Teile Synthesewachs ($A_{21}$) werden bei 105-110°C geschmolzen und mit 67,7 Teilen Dispergator ($B_{211}$) gemischt. Nun werden der Schmelze noch 67,7 Teile Dispergator ($B_{221}$), gelöst in 29,1 Teilen 1,2-Propylenglykol (aus der Quaternierung), zugegeben und die entstandene klare Schmelze von 110-115°C wird in 1597,5 Teile entmineralisiertes Wasser von 95°C zufließen gelassen. Nun werden der entstandenen Dispersion 187,5 Teile Dispersion (J) zugefügt und es wird die Kühlung eingeschaltet. Bei 95 bis 85°C werden 11,1 Teile Eisessig, 562,5 Teile Eis und 340 Teile entmineralisiertes kaltes Wasser zugegeben und es wird weiter bis auf Raumtemperatur abgekühlt. Bei Raumtemperatur werden noch 10,2 Teile einer 25 %-igen wäßrigen Dispersion von ($C_1$) und 8 Teile eines Siliconentschäumers zugegeben. Man erhält eine sehr feine Dispersion ($G_{10}$) mit sehr guten Garnavivageeigenschaften.

BEISPIEL 11

375 Teile Paraffinwachs ($A_{31}$), 225,0 Teile Emulgator ($B_{11}$), 22,5 Teile Emulgator ($B_{12}$), 375,0 Teile Paraffinwachs ($A_{12}$) und 187,5 Teile Synthesewachs ($A_{21}$) werden bei 105-110°C geschmolzen und mit 67,7 Teilen Dispergator ($B_{211}$) gemischt. Nun werden der Schmelze noch 67,7 Teile Dispergator ($B_{221}$), gelöst in 29,1 Teilen 1,2-Propylenglykol (aus der Quaternierung), zugegeben und die entstandene klare Schmelze von 110-115°C wird in 1597,5 Teile entmineralisiertes Wasser von 95°C zufließen gelassen. Nun werden der entstandenen Dispersion 375 Teile Dispersion (J) zugefügt und es wird die Kühlung eingeschaltet. Bei 95 bis 85°C werden 11,1 Teile Eisessig, 562,5 Teile Eis und 183 Teile entmineralisiertes kaltes Wasser zugegeben und es wird weiter bis auf Raumtemperatur abgekühlt. Bei Raumtemperatur werden noch 10,2 Teile einer 25 %-igen wäßrigen Dispersion von ($C_1$) und 8 Teile eines Siliconentschäumers zugegeben. Man erhält eine sehr feine Dispersion ($G_{11}$) mit sehr guten Garnavivageeigenschaften.

BEISPIELE 12 bis 22

Man verfährt wie in den jeweiligen Beispielen 1 bis 11 beschrieben, mit dem Unterschied, daß kein Hilfsmittel ($C_1$) zugegeben wird. Man erhält die jeweiligen Dispersionen ($G_{12}$), ($G_{13}$), ($G_{14}$), ($G_{15}$), ($G_{16}$), ($G_{17}$), ($G_{18}$), ($G_{19}$), ($G_{20}$), ($G_{21}$) und ($G_{22}$) mit sehr guten Garnavivageeigenschaften.

APPLIKATIONSBEISPIEL A

In einem Kreuzspulenfärbeapparat wird eine Kreuzspule aus 100 %-igem, gebleichtem, zweifach gezvirntem Baumvollgarn mit einer englischen Nummer Ne von 30, im Ausziehverfahren, bei einem Flottenverhältnis von 1:15, mit 1,5 % und 3,0 % der gemäß Beispiel 1 erhaltenen Dispersion ($G_1$) für 30 Minuten bei 40°C und pH 5 (eingestellt mit Essigsäure) behandelt. Dann wird die Flotte abgelassen und die Spule bei 102°C getrocknet. Die Reibungskoeffizienten der Garne werden im Rothschild F-Meter L-1188 gemessen und sind wie folgt:

Das nicht-ausgerüstete Garn ergibt bei einer Vorspannung von 10 cN, einer Abwinkelung von 180° und einer Geschwindigkeit von 50 m/Min, einen Reibungskoeffizienten $\mu$ von 0,7 bis 0,8.

Die ausgerüsteten Garne ergeben bei einer Vorspannung von 10 cN, einer Abvinkelung von 180° und einer Geschwindigkeit von 100 m/Min, einen Reibungskoeffizienten $\mu < 0,2$.

APPLIKATIONSBEISPIEL B

Man verfährt wie im Applikationsbeispiel A beschrieben, mit dem Unterschied, daß anstelle einer Kreuzspule im Kreuzspulenfärbeapparat ein Baumwollstrang aus 100 %-igem, gebleichtem, zweifach gezwirntem Baumwollgarn mit einer englischen Nummer Ne von 30, nach dem Ausziehverfahren mit der Dispersion ($G_1$) gemäß Beispiel 1 aviviert wird. Die wie im Applikationsbeispiel A gemessenen Reibungskoeffizienten $\mu$ sind für die ausgerüstete Ware < 0,2.

APPLIKATIONSBEISPIELE A2 bis A22 und B2 bis B22

Man verfährt wie in den Applikationsbeispielen A und B beschrieben, mit dem Unterschied, daß anstelle der Dispersion ($G_1$) gemäß Beispiel 1 die Dispersionen ($G_2$), ($G_3$), ($G_4$), ($G_5$), ($G_6$), ($G_7$), ($G_8$), ($G_9$), ($G_{10}$), ($G_{11}$), ($G_{12}$), ($G_{13}$), ($G_{14}$), ($G_{15}$), ($G_{16}$), ($G_{17}$), ($G_{18}$), ($G_{19}$), ($G_{20}$), ($G_{21}$) und ($G_{22}$) gemäß den jeweiligen Beispielen 2, 3, 4, 5, 6, 7, 8, 9, 10, 11, 12, 13, 14, 15, 16, 17, 18, 19, 20, 21 und 22 eingesetzt werden. Die Reibungskoeffizienten $\mu$ sind, bei einer Vorspannung von 10 cN, einer Abwinkelung von 180° und einer Geschwindigkeit von 100 m/Min, < 0,2.

**Patentansprüche**

**1.** Wäßrige Wachsdispersion (G), die einen Gehalt an

(A) einem Wachsgemisch aus

($A_1$) mindestens einem nicht oxydierten Paraffinwachs mit Nadelpenetration (nach ASTM-D 1321) $\leq$ 20 dmm und Schmelzbereich oberhalb 65°C,
und

($A_2$) mindestens einem oxydierten Kohlenwasserstoffwachs mit Nadelpenetration (nach ASTM-D 1321) $\leq$ 4 dmm
und gegebenenfalls

($A_3$) mindestens einem nicht oxydierten Paraffinwachs mit Nadelpenetration (nach ASTM-D 1321) $\leq$ 55 dmm und Schmelzbereich unterhalb oder bis 65°C
und/oder

($A_4$) mindestens einem kationisch modifizierten oxydierten Kohlenwasserstoffwachs,

und

(B) einem kationischen Dispergiermittelsystem aufweist.

**2.** Wäßrige Wachsdispersion (G) gemäß Anspruch 1, dadurch gekennzeichnet, daß ($A_1$) eine Nadelpenetration im Bereich von 5 bis 16 dmm und einen Schmelzbereich innerhalb des Temperaturbereiches von 80 bis 105°C aufweist.

**3.** Wäßrige Wachsdispersion (G) gemäß Anspruch 1 oder 2, dadurch gekennzeichnet, daß das Gewichtsverhältnis ($A_2$)/($A_1$) im Bereich von 1/10 bis 1/1,5 liegt.

**4.** Wäßrige Wachsdispersion (G) gemäß einem der Ansprüche 1 bis 3, dadurch gekennzeichnet, daß ($A_4$) ein Fischer-Tropsch-Wachs, oxydiertes Polyäthylenwachs oder oxydiertes Mikrowachs ist, das eine Nadelpenetration (nach ASTM-D 1321) $\leq$ 20 dmm, einen Tropfpunkt $\geq$ 80°C und eine Säurezahl im Bereich von 5 bis 80 aufweist, das dadurch kationisch modifiziert ist, daß es mit einem Polyamin, das nur eine primäre Aminogruppe aufweist, amidiert ist und quaterniert ist.

**5.** Wäßrige Wachsdispersion (G) gemäß einem der Ansprüche 1 bis 4, dadurch gekennzeichnet, daß das Gewichtsverhältnis ($A_4$)/($A_2$) $\leq$ 0,5 ist.

**6.** Wäßrige Wachsdispersion (G) gemäß einem der Ansprüche 1 bis 5, dadurch gekennzeichnet, daß (B) ein Gemisch aus den folgenden Tensiden ($B_1$) und ($B_2$) ist

($B_1$) mindestens einem nicht-ionogenen oder schwach kationischen Dispergator

und (B2) mindestens einem kationischen Tensid der Formel

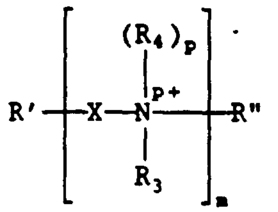 $nA^-$ (I),

worin

R' einen Rest der Formel

$R_1$-CO-NH- (α)

oder

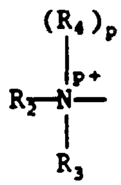 (β),

R" $R_5$ oder -X-R',
$R_1$-CO- den Acylrest einer $C_{10-24}$ Fettsäure,
$R_2$ einen aliphatischen $C_{10-24}$-Kohlenwasserstoffrest,
$R_3$ Wasserstoff, $C_{1-4}$-Alkyl, Benzyl, -Y-OH oder -Z-CO-$NH_2$,
$R_4$ $C_{1-4}$-Alkyl oder Benzyl,
$R_5$ Wasserstoff, $C_{1-4}$-Alkyl, Benzyl, -Y-OH oder -Z-CO-$NH_2$,
X $C_{2-6}$-Alkylen,
Y $C_{2-4}$-Alkylen oder Styren,
Z $C_{1-3}$-Alkylen,

jeder der Indizes p, unabhängig voneinander, 0 oder 1,

m eine Zahl von 0 bis 2, wenn R' für einen Rest der Formel (β) steht, oder von 1 bis 2, wenn R' für einen Rest der Formel (α) steht,
$A^-$ ein Äquivalent eines Anions und
n die Gesamtzahl positiver Ladungen in ($B_2$)

bedeuten, und das, wenn mindestens einer der Indizes p = 0 ist, gegebenenfalls protoniert ist.

**7.** Wäßrige Wachsdispersion (G) gemäß Anspruch 6, dadurch gekennzeichnet, daß ($B_2$) ein Gemisch aus

($B_{21}$) mindestens einer Verbindung der Formel (I), worin $\Sigma p = 0$ ist,

und ($B_{22}$) mindestens einer Verbindung der Formel (I), worin $\Sigma p \geq 1$ ist, $R_3$ $C_{1-4}$-Alkyl, Benzyl, -Z-CO-$NH_2$ oder -Y-OH bedeutet, und, wenn R" $R_5$ bedeutet, $R_5$ für $C_{1-4}$-Alkyl, Benzyl, -Y-OH oder -Z-CO-$NH_2$ steht, und worin, bezogen auf die gesamten Fettreste $R_1$ und $R_2$, pro Fettrest 0,5 bis 2 quaternäre Gruppen der Formel

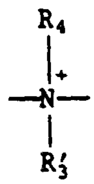

(Y),

worin $R_3$' $C_{1-4}$-Alkyl, Benzyl, -Y-OH oder -Z-CO-$NH_2$ bedeutet, enthalten sind ist.

**8.** Wäßrige Wachsdispersionen (G) gemäß einem der Ansprüche 1 bis 7 zusätzlich enthaltend
(C) mindestens ein weichmachendes und/oder antistatisches Hilfsmittel
und/oder
(D) ein Konservierungsmittel oder/und einen Entschäumer.

**9.** Wäßrige Wachsdispersionen (G) gemäß einem der Ansprüche 1 bis 8 zusätzlich enthaltend
(E) mindestens ein amphoteres Tensid.

**10.** Wäßrige Wachsdispersion (G) gemäß einem der Ansprüche 1 bis 9 mit einem Trockenstoffgehalt von 5 bis 60 Gew.-%, vorzugsweise 10 bis 50 Gew.-%.

**11.** Wäßrige Wachsdispersion (G) gemäß einem der Ansprüche 1 bis 10 mit einem pH im Bereich von 3 bis 7.

**12.** Verfahren zur Herstellung von wäßrigen Wachsdispersionen (G) gemäß einem der Ansprüche 1 bis 11, dadurch gekennzeichnet, daß man die jeweiligen dispergierten Komponenten vermischt oder die gemischten geschmolzenen Komponeneten ($A_1$) und ($A_2$) und (B) und gegebenenfalls ($A_3$) mit Wasser mischt und gegebenenfalls mit ($A_4$) und/oder Säure zur pH-Einstellung versetzt und gegebenenfalls (C) und/oder (D) und/oder (E) zugibt.

**13.** Verwendung der Wachsdispersionen (G) gemäß einem der Ansprüche 1 bis 11 als Ausrüstungsmittel für Fasermaterial.

**14.** Verwendung gemäß Anspruch 13 zur Garnavivage.

## Claims

**1.** Aqueous wax dispersion (G) having a content of

(A) a wax mixture of

($A_1$) at least one non-oxidized paraffin wax with needle penetration (according to ASTM-D 1321) $\leq$ 20 dmm and melting range above 65°C
and

($A_2$) at least one oxidized hydrocarbon wax with needle penetration (according to ASTM-D 1321) $\leq$ 4 dmm and optionally

($A_3$) at least one non-oxidized paraffin wax with needle penetration (according to ASTM-D 1321) $\leq$ 55 dmm and melting range below or up to 65°C
and/or

($A_4$) at least one cationically modified oxidized hydrocarbon wax

and

(B) a cationic dispersant system.

**2.** Aqueous wax dispersion (G) according to claim 1, characterized in that ($A_1$) has a needle penetration in the range

of 5 to 16 dmm and a melting range within the temperature range of 80 to 105°C.

**3.** Aqueous wax dispersion (G) according to claim 1 or 2, characterized in that the weight ratio $(A_2)/(A_1)$ is in the range of 1/10 to 1/1.5.

**4.** Aqueous wax dispersion (G) according to any one of claims 1 to 3, characterized in that $(A_4)$ is a Fischer-Tropsch wax, an oxidized polyethylene wax or an oxidized microwax, having a needle penetration (according to ASTM-D 1321) $\leq$ 20 dmm, a dripping point $\geq$ 80°C and an acid number in the range of 5 to 80, that has been cationically modified by amidation with a polyamine containing only one primary amino group and quaternized.

**5.** Aqueous wax dispersion (G) according to any ome of claims 1 to 4, characterized in that the weight ratio $(A_4)/(A_2)$ is $\leq$ 0.5.

**6.** Aqueous wax dispersion (G) according to any one of claims 1 to 5, characterized in that (B) is a mixture of the following surfactants $(B_1)$ and $(B_2)$:

$(B_1)$ at least one non-ionogenic or weakly cationic dispersant

and $(B_2)$ at least one cationic surfactant of the formula

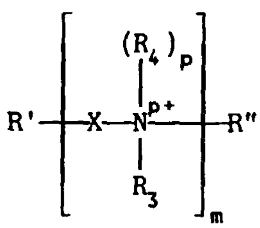 $nA^-$ (I),

wherein

R' signifies a radical of the formula

$R_1$-CO-NH- (α)

or

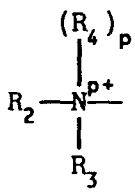 (β),

R" signifies $R_5$ or -X-R',
$R_1$-CO- signifies the acyl radical of a $C_{10-24}$-fatty acid,
$R_2$ signifies an aliphatic $C_{10-24}$-hydrocarbon radical,
$R_3$ signifies hydrogen, $C_{1-4}$-alkyl, benzyl, -Y-OH or -Z-CO-$NH_2$,
$R_4$ signifies $C_{1-4}$-alkyl or benzyl,
$R_5$ signifies hydrogen, $C_{1-4}$-alkyl, benzyl, -Y-OH or -Z-CO-$NH_2$,
X signifies $C_{2-6}$-alkylene,
Y signifies $C_{2-4}$-alkylene or styrene,
Z signifies $C_{1-3}$-alkylene,

each of the indexes p, independently from each other, signifies 0 or 1,

m signifies a number from 0 to 2 if R' signifies a radical of formula (β), or from 1 to 2 if R' signifies a radical of formula (α),
$A^-$ signifies an equivalent of an anion and
n signifies the total number of positive charges in $(B_2)$

and which, if at least one of the indexes p = 0, is optionally protonated.

**7.** Aqueous wax dispersion (G) according to claim 6, characterized in that ($B_2$) is a mixture of

($B_{21}$) at least one compound of formula (I), in which $\Sigma p = 0$

and ($B_{22}$) at least compound of formula (I), in which $\Sigma p \geq 1$, $R_3$ signifies $C_{1-4}$-alkyl, benzyl, -Z-CO-$NH_2$ or -Y-OH and, if R" signifies $R_5$ , $R_5$ stands for $C_{1-4}$-alkyl, benzyl, -Y-OH or -Z-CO-$NH_2$, and wherein, referred to the total of the fatty radicals $R_1$ and $R_2$, there are 0.5 to 2 quaternary groups of the formula

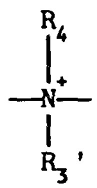

(γ),

in which $R_3$' signifies $C_{1-4}$-alkyl, benzyl, -Y-OH or -Z-CO-$NH_2$,
per each fatty radical.

**8.** Aqueous wax dispersions (G) according to any one of claims 1 to 7, further containing

(C) at least one softening and/or antistatic adjuvant
and/or
(D) a preserving agent or/and a defoamer.

**9.** Aqueous wax dispersions (G) according to any one of claims 1 to 8, further containing
(E) at least one amphoteric surfactant.

**10.** Aqueous wax dispersion (G) according to any one of claims 1 to 9 with a dry substance content of 5 to 60 % by weight, preferably 10 to 50 % by weight.

**11.** Aqueous wax dispersion (G) according to any one of claims 1 to 10, with a pH in the range of 3 to 7.

**12.** Process for the production of an aqueous wax dispersion (G) according to any one of claims 1 to 11, characterized in that the respective dispersed components are mixed with each other or the mixed molten components ($A_1$) and ($A_2$) and (B) and optionally ($A_3$) are mixed with water and optionally ($A_4$) and/or acid is further added for pH adjustment and optionally (C) and/or (D) and/or (E) is further added.

**13.** Use of wax dispersions (G) according to any one of claims 1 to 11 as finishing agent for fibrous material.

**14.** Use according to claim 13 for the finishing of yarns.

## Revendications

**1.** Dispersion aqueuse (G) de cires qui comprend

(A) un mélange des cires

($A_1$) au moins une cire paraffinique non oxydée ayant un indice de pénétration (selon ASTM-D 1321) ≤ 20 dmm et un intervalle de fusion supérieur à 65°C,
et
($A_2$) au moins une cire hydrocarbonée oxydée ayant un indice de pénétration (selon ASTM-D 1321) ≤ 4 dmm,
et éventuellement
($A_3$) au moins une cire paraffinique non oxydée ayant un indice de pénétration (selon ASTM-D 1321) ≤ 55 dmm et un intervalle de fusion inférieur ou jusqu'à 65°C,
et/ou

($A_4$) au moins une cire hydrocarbonée oxydée modifiée cationiquement,

et
(B) un système cationique d'agents de dispersion.

**2.** Dispersion aqueuse (G) de cires selon la revendication 1, caractérisée en ce que ($A_1$) a un indice de pénétration compris entre 5 et 16 dmm et un intervalle de fusion compris entre 80 et 105°C.

**3.** Dispersion aqueuse (G) de cires selon la revendication 1 ou 2, caractérisée en ce que le rapport pondéral ($A_2$)/($A_1$) est compris entre 1/10 et 1/1,5.

**4.** Dispersion aqueuse (G) de cires selon l'une quelconque des revendications 1 à 3, caractérisée en ce que ($A_4$) est une cire Fischer-Tropsch, une cire polyéthylénique oxydée ou une cire microcristalline oxydée, ayant un indice de pénétration (selon ASTM-D 1321) $\leq$ 20 dmm, un point de goutte $\geq$ 80°C et un indice d'acide compris entre 5 et 80, laquelle est modifiée cationiquement par amidation avec une polyamine ne comportant qu'un seul groupe amino primaire et quaternisation.

**5.** Dispersion aqueuse (G) de cires selon l'une quelconque des revendications 1 à 4, caractérisée en ce que le rapport pondéral ($A_4$)/($A_2$) est $\leq$ 0,5.

**6.** Dispersion aqueuse (G) de cires selon l'une quelconque des revendications 1 à 5, caractérisée en ce que (B) est un mélange des agents tensioactifs ($B_1$) et ($B_2$) suivants,

($B_1$) au moins un agent de dispersion non ionogène ou faiblement cationique,

et ($B_2$) au moins un agent tensio-actif cationique de formule

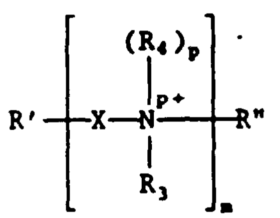 $nA^-$ (I),

dans laquelle

R' signifie un reste de formule

$$R_1\text{-CO-NH-} \quad (\alpha)$$

ou bien

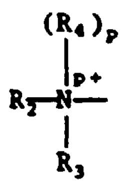 (β),

R" signifie $R_5$ ou -X-R',
$R_1$-CO- signifie un reste acyle d'un acide gras en $C_{10-24}$,
$R_2$ signifie un reste hydrocarboné aliphatique en $C_{10-24}$,
$R_3$ signifie l'hydrogène, alkyle en $C_{1-4}$, benzyle, -Y-OH ou -Z-CO-$NH_2$,
$R_4$ signifie alkyle en $C_{1-4}$ ou benzyle,
$R_5$ signifie l'hydrogène, alkyle en $C_{1-4}$, benzyle, -Y-OH ou -Z-CO-$NH_2$,
X signifie alkylène en $C_{2-6}$,
Y signifie alkylène en $C_{2-4}$ ou styrénylène,
Z signifie alkylène en $C_{1-3}$,

chaque indice p, indépendamment l'un de l'autre, signifie 0 ou 1,

m signifie un nombre de 0 à 2, lorsque R' signifie un reste de formule ($\beta$), ou bien de 1 à 2, lorsque R' signifie un reste de formule ($\alpha$),
$A^-$ signifie un équivalent d'un anion,
et n signifie le nombre total des charges positives dans ($B_2$),

et lorsque l'un au moins des indices p = 0, cet agent tensio-actif cationique étant éventuellement protoné.

**7.** Dispersion aqueuse (G) de cires selon la revendication 6, caractérisée en ce que ($B_2$) est un mélange de

($B_{21}$) au moins un composé de formule (I) où $\Sigma p = 0$,
et ($B_{22}$) au moins un composé de formule (I) où $\Sigma p \geq 1$, $R_3$ signifie alkyle en $C_{1-4}$, benzyle, -Z-CO-$NH_2$ ou -Y-OH et, lorsque R" signifie $R_5$, $R_5$ représente alkyle en $C_{1-4}$, benzyle, -Y-OH ou -Z-CO-$NH_2$ et où par rapport au total des restes gras $R_1$ et $R_2$, la molécule contient par reste gras de 0,5 à 2 groupes quaternaires de formule

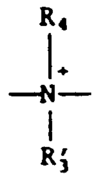

($\gamma$),

où $R_3$' signifie alkyle en $C_{1-4}$, benzyle, -Y-OH ou -Z-CO-$NH_2$.

**8.** Dispersions aqueuses (G) de cires selon l'une quelconque des revendications 1 à 7, comprenant également

(C) au moins un agent adoucissant et/ou anti-statique,
et/ou
(D) un agent de conservation ou/et un agent antimousse.

**9.** Dispersions aqueuses (G) de cires selon l'une quelconque des revendications 1 à 8, comprenant également (E) au moins un agent tensio-actif amphotère.

**10.** Dispersion aqueuse (G) de cires selon l'une quelconque des revendications 1 à 9 ayant une teneur en matières sèches comprise entre 5 et 60%, de préférence entre 10 et 50% en poids.

**11.** Dispersion aqueuse (G) de cires selon l'une quelconque des revendications 1 à 10 ayant un pH compris entre 3 et 7.

**12.** Procédé de préparation des dispersions aqueuses (G) de cires selon l'une quelconque des revendications 1 à 11, caractérisé en ce qu'on mélange les différents composants à l'état dispersé ou qu'on mélange avec de l'eau les composants ($A_1$) et ($A_2$) et (B) et éventuellement ($A_3$) à l'état fondu, on ajoute éventuellement ($A_4$) et/ou de l'acide pour ajuster le pH, et on ajoute éventuellement (C) et/ou (D) et/ou (E).

**13.** L'utilisation des dispersions aqueuses (G) de cires selon l'une quelconque des revendications 1 à 11, comme agents de finissage pour une matière fibreuse.

**14.** L'utilisation selon la revendication 13, pour l'avivage des filés.